# EUROPEAN PATENT APPLICATION

(11) **EP 3 809 021 A1**
(43) Date of publication of application: **21.04.2021**
(21) Application number: 19382900.9
(22) Date of filing: 14.10.2019
(51) Int. Cl.: F16H 59/02, F16H 61/24, F16H 59/08

(54) **ROTARY GEAR SHIFTER WITH NOISE DAMPING FOR MOTOR VEHICLE TRANSMISSIONS**

(71) Applicant: Fico Triad, S.A., 08028 Barcelona (ES)
(72) Inventor: MORENO COLOM, Javier, 08232 Viladecavalls (Barcelona) (ES)
(74) Representative: Hoffmann Eitle

(57) **Abstract**

The invention refers to a gear shifter (1) for vehicle transmissions, comprising: a supporting surface (3), a gear shift selector (4) mounted on the supporting surface (3) and rotatable about an axis (X), wherein the gear shift selector (4) is provided with at least one contoured surface (5) having alternating valleys and peaks as to define stable and unstable areas of the contouring surface (5), wherein the contoured surface (5) is jointly rotatable with the gear shift selector (4), a damping member (10) made of an elastic material, and arranged to slide on the contoured surface (5) as the gear shift selector (4) rotates about the axis (X), and wherein the damping member (10) is biased against the contoured surface (5) and towards the axis (X).The rotary gear shifter provides a low friction and noise cancelling mechanism that dampens the noise originated during the gear shift.

## Description

### Field and object of the invention

The present invention refers in general to gear shifters for shifting vehicle transmissions, providing a shift feedback feeling feature to the driver.

An object of the invention is to provide a rotary gear shifter incorporating a low friction and noise cancelling mechanism that dampens the noise originated during the gear shifting.

### Background of the invention

Motor vehicle transmissions, either manual or automatic transmissions, incorporates a gear actuator such as a dial-type rotatable knob or a joystick-type lever, operable for selecting gearshift positions corresponding to different transmission gears. This gear actuator actuates a gear box, and typically has the form of a rotatable drum or a stick, and has a spring biased plunger arranged to slide on a contoured surface as the shift mechanism is moved, thereby selecting a gearshift position and at the same time providing the driver with a gearshift feel.

The U.S. Patent applications US-7.661.334 A1 and US2017/0159808 A1 describe examples of such a shifting mechanisms, including spring biased plungers to slide on a contoured surface as the shift lever is moved for selecting a gearshift position and providing a gearshift feel.

The main disadvantage in the prior art solutions, is that when the shift plunger or roller reach a stable position defined by the contoured surface, the plunger or roller impact against the contoured surface generating an annoying noise.

In use, the shift plunger is moved along the contoured surface with the plunger pressed by means of a spring against the contoured surface while it is shifted between different gearshift positions defined in such a contoured surface. During actuation of the shift lever, annoying noise is usually generated when the shift plunger is moved and returns to a stable position once a gearshift position has been selected, generating noise as the plunger impacts against the contoured surface when the shift lever returns to a stable position. The generated noise might be perceived from the interior of the vehicle, resulting in discomfort for the driver and passengers as the vehicle is running.

Some solutions have been suggested to reduce noise, generally based on a sound-insulating element provided on the contoured surface. For example, PCT publication WO2015185280 describes a shift mechanism for an automatic transmission in a motor vehicle including a contoured surface, onto which a shift plunger is operated for selecting gearshift positions corresponding to different transmission gears, and wherein the contoured surface is made of materials having different degrees of elasticity.

Nevertheless, these solutions are not fully satisfactory since still noise is generated and additionally, the shift plunger has to overcome a large amount of friction and gripping from the sound dampening element in the contoured surface. This is because one portion of the shift plunger is always in contact with the sound dampening element, as it is moved from one gearshift position to another.

Another known solutions, are based on leaf springs having at one end a roller at rolling on a contoured surface, whereas the other end is attached to a housing. These solutions increase the complexity of the manufacturing process due to the fixation of the leaf spring to the housing and the needed room to perform this solution. Furthermore, in case of low force feedback, the leaf springs could be buckled due to its dimensions, causing instability of its position and in consequence, the sensation of free play.

Therefore, there is a need for shifting mechanisms for motor vehicle transmissions that avoid or at least reduce significantly noise generation, and that at the same time can be manufactured in a cost-effective manner.

### Summary of the invention

The present invention is defined in the attached independent claim, and refers to a gear shifter for vehicle transmissions, wherein the shifter comprises a gear shift selector incorporating at least one contoured surface, and a noise damping element biased against the contoured surface, preferably through a lever. With this arrangement, the conventional plunger is replaced by a lever, and the contouring surface might be the element that is moved (instead of the noise damping element), so that the damping member remains in a fixed location (except for the balancing movement as it follows the undulating contour of the contouring surface).

Therefore, an aspect of the invention refers to a gear shifter for vehicle transmissions, wherein the gear shifter comprises a supporting surface and a gear shift selector rotatably mounted on the supporting surface and rotatable about an axis (X). The gear shift selector is provided with at least one contoured or undulating surface, having alternating valleys (concave areas) and peaks (convex areas) defining stable and unstable positions of the noise damping member, as to provide a gear shift feeling to the driver. A damping member made of an elastic material, is arranged to slide or roll on the contoured surface as the gear shift selector rotates about the axis (X). The damping member is biased against the contoured surface in a direction towards the axis (X).

The stable positions are defined by valleys of the contouring surface, and are areas of the contouring surface wherein the damping member rest and remain within a valleys, in a way that that valley retains the damping member against the biasing force exerted on the damping member. The stable positions correspond to a gear command position, like Drive, Reverse, etc. The unstable position are areas of the contouring surface, where the biasing force exerted on the damping member would force the gear shift selector to rotate towards a stable position defined above. Generally, the peaks or convex areas of the contouring surface, conform these unstable areas, but also some valleys (depending of their inclination or curvature), can define unstable areas.

The gear shifter additionally comprises at least one lever pivotable with respect to an axis (Y), and preferably mounted on the supporting surface. The lever is biased against the contoured surface by biasing means for example a spring member attached to the supporting surface, thus, also biasing the damping member against the contouring surface. The spring member might consist for example of a leaf spring, a compression spring, a torsion spring or a wire spring, configured for biasing the lever against the respective contouring surface.

Preferably, the axis (X) and (Y) are parallel to each other. The lever is biased against the contoured surface in a direction transversal to the axis (X) and towards the axis (X), preferably orthogonally. This arrangement facilitates the assembly of the shifter during the manufacturing process, especially in automated assembling process, since the spring member can be mounted on the supporting surface from the same direction as the lever and the gear shift selector.

Additionally, the contoured surface is arranged to rotate on a plane orthogonal to the axis (X).

The damping member is made of a suitable soft material, for example rubber or silicone, as to absorb or at least reduce impacts and vibrations in order to avoid noise generation. The lever is arranged and configured in such a way that the damping member slides on the contoured surface, as the gear shift selector rotates about the axis (X). For that, each lever preferably incorporates a roller rotatably mounted with the lever, and the damping member is coupled with the roller, so that the damping member rolls on the respective contouring surface as the contouring surface rotates, thereby avoiding noise generation and avoiding friction between the lever and the contouring surface while the lever transits from one valley to an adjacent one.

Preferably, the rotation axis of the roller is also parallel to the axis (X,Y).

In a preferred embodiment, the gear shift selector is a knob (or cam) having a cylindrical body incorporating at least first and second diametrically opposed contouring surfaces with respect to the axis (X). First and second contouring surfaces extends circumferentially around axis (X), and rotate together with the knob. In this embodiment, the gear shifter further comprises first and second levers respectively pivotable about axis (Y,Y') and biased against first and second contouring surfaces, and preferably biased in opposite directions and towards the axis (X). Both axis (Y,Y') are parallel to the axis (X).

In other preferred embodiments, the gear shifter has three or four contouring surfaces incorporating their respective damping members and biasing means, as defined above.

The damping members of first and second levers, slide respectively on a contoured surface as the gear shift selector rotates about the axis (X).

In a preferred embodiment, at least a contouring surface has at least one rail or wall extending along the whole contouring surface in the peaks and in the valleys, or only along some parts thereof. Preferably, the wall extends only along the unstable areas of the contouring surface, whereas the stable areas have no wall. The damping member is mounted on a roller fitted to the lever, and wherein the wall, the roller and the damping member are configured in a way that at the unstable areas of the contouring surface, the roller can roll on the wall so that the damping member is distanced from the contouring surface. At the stable areas where there are no wall, the damping member rolls directly onto the contoured surface.

The height of the wall preferably may be variable so that the free end of the same defines a curvature that match the curvature of the areas of contouring surface where the is no wall. In this way, the damping member and/or the roller would slide or roll onto a continuous curved surface without steps.

The contouring surfaces have the same shape, but they are placed in an inverted position relative to each other, in a way that the valleys are placed at diametrically opposed positions with respect to the axis (X).

In another preferred embodiment, the gear shift selector is a lever arm arranged orthogonally with respect to the axis (X), and including only one contouring surface.

In a preferred embodiment each lever is an individual body, preferably made of a solid plastic material, so no buckling would appear during its use. The pivot axis (Y) and the noise damping element are placed at opposite ends of the lever.

Alternatively to the lever, a flexible metallic strip is used having one end coupled with the supporting surface. This can be accomplished for example by providing a U-shaped flexible metallic strip having a central arm and two lateral arms, wherein the metallic strip is attached to the supporting surface at its central arm, and the lateral arms press the damping member against the contouring surfaces.

Preferably, each lateral arm incorporates a roller rotatably mounted, and a damping member is coupled with the roller, so that the damping member rolls on the respective contouring surface as the contouring surface rotates, thereby avoiding noise generation as the lever transits from one valley an adjacent one.

The gear shifter also incorporates an external housing enclosing the supporting surface, the levers, and a part of the gearshift selector. A part of the gearshift selector extends outside the casing for its manual actuation by a driver.

### Brief description of the drawings

Preferred embodiments of the invention are henceforth described with reference to the accompanying drawings, wherein:
Figure 1.- shows two perspective views of a gear shifter according to the invention embodied as a dial-type knob, wherein the embodiment of figure A includes leaf spring as a spring member, and the embodiment of figure B includes a wire spring as a spring member.
Figure 2.- shows in figures A and B, two perspective views of the gear shift selector of figure 1.
Figure 3.- shows in figures A, B two perspective views of the lever of figure 1. Figure C shows a perspective view of an alternative design of the lever.
Figure 4.- shows in top plan view, the gear shifter of the embodiment of figure 1 in four different angular positions (figures A,B,C,D) corresponding to two stable positions or gear command positions: (Figures 4B,4C), and two unstable positions (Figures 4A,4D). In the unstable positions, the gear shift selector (4) would be forced to move to a stable position.
Figure 5.- shows another preferred embodiment similar to the embodiment of figure 1 but including slotted contoured surfaces. Figure A shows a perspective view of a part of the assembly; figure B shows an enlarged detail of the damping element sliding on the contoured surface and with the lever sectioned longitudinally; figure C is perspective view of the shift selector, and figure D is a top plane view of the assembly.
Figure 6.- shows in figure A a perspective view of an alternative embodiment of the invention in which the levers are replaced by a flexible metallic strip. Figure B is a perspective view of the metallic strip alone.
Figure 7.- shows a perspective view of an alternative embodiment a gear shifter according to the invention embodied as a lever arm or joystick.
Figure 8.- shows a perspective view of a dial-type rotatable knob incorporating the gear shifter of figures 1 - 6.

### Preferred embodiment of the invention

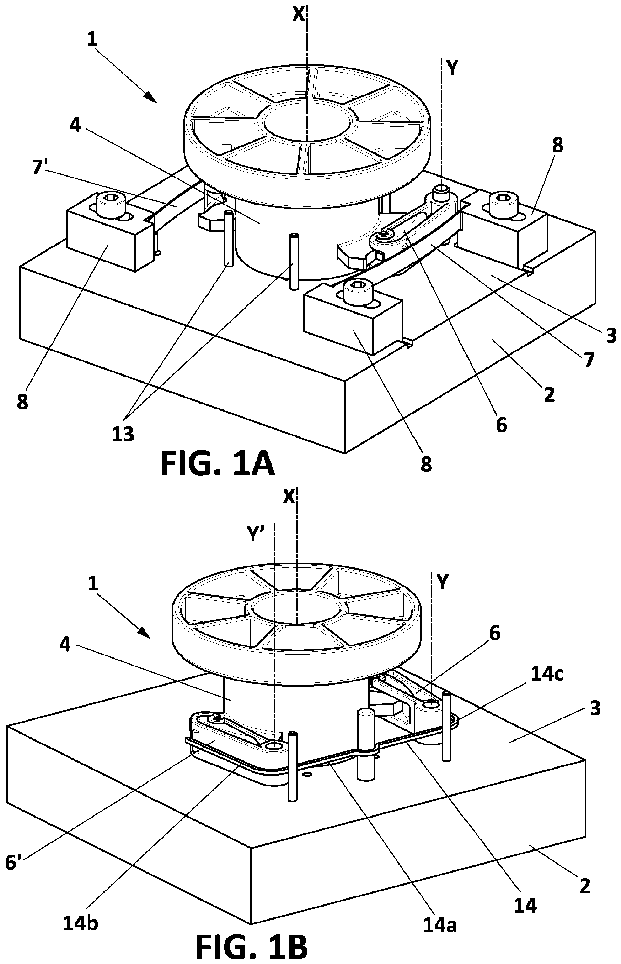

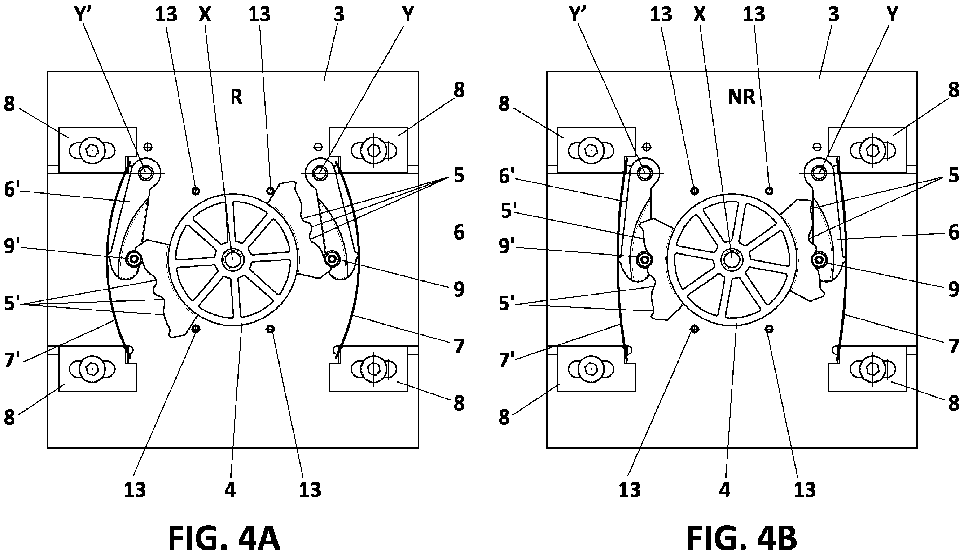

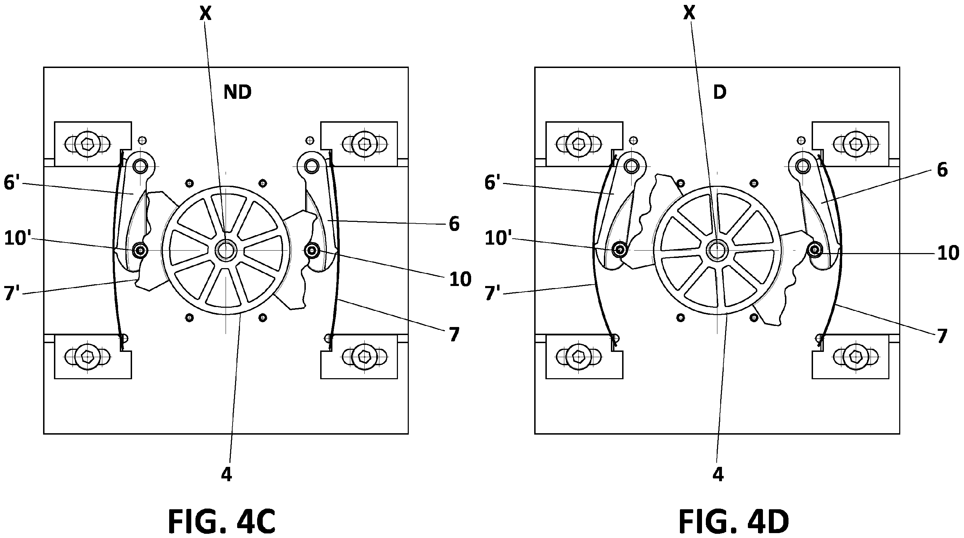

A preferred embodiment of the gear shifter (1) of the invention is shown in **Figure 1A****,** and it comprises a base (2) defining a supporting surface (3), and a gear shift selector (4) mounted on the supporting surface (3) and being rotatable about an axis (X). The gear shift selector (4) is provided with first and second contoured surfaces (5,5') attached to the selector (4) and configured with an undulating contour, having alternating valleys (V) and peaks (P) as to define stable an unstable positions or areas. In this embodiment, the two central valleys define stable positions of the gear shifter corresponding to the two positions of **Figures 4B****,****4C****.**

In this preferred embodiment, the supporting surface (3) is flat or includes flat areas, but it could also has other shapes.

The contouring surfaces (5,5') are diametrically opposed with respect to the axis (X), and are jointly rotatable with the gear shift selector (4). The contouring surfaces (5,5') have the same shape, and are placed in an inverted position relative to each other, so that their valleys are placed at diametrically opposed locations, as it can be observed more clearly in **Figures 4A-4D****.**

The gear shifter (1) incorporates first and second levers (6,6') pivotable respectively with respect to axis (Y,Y'), and arranged and configured to contact respectively on the first and second contoured surfaces (5,5'). The levers (6,6') are biased against the respective contoured surfaces (5,5') by means of first and second elastic members, in the case of the embodiment of **Figure 1A** consisting of first and second leaf springs (7,7') attached at their ends to the supporting surface (3), and arranged to push the respective levers (6,6') towards the axis (X) in an orthogonal direction to the axis (X). As more clearly represented in the sequence of **Figures 4A-****4D,** leaf springs (7,7') are arranged to exert force on the respective levers (6,6') in opposite directions and towards the axis (X).

As shown in the figures, axis (X) and (Y) are parallel to each other, and the contouring surfaces (5,5') extend circumferentially about the axis (X), and are rotatable on a plane transversal to the axis (X). As shown in the drawings, assuming that the supporting surface (3) is generally flat or it contains flat areas, the contouring surface (5) is orthogonal to the flat general arrangement or flat areas of the supporting surface (3). In other words, each contouring surface (5,5') is elongated and an axis arranged across a contouring surface (5,5') and passing on the contouring surface (5,5'), is parallel to the axis (X).

Four attachment fittings (8) for attaching the ends of the first and second leaf springs (7,7'), are mounted on the supporting surface (3) in a way that their position relative to the levers can be modified, so that the position of the leaf springs (7,7') can be adjusted as to exert more or less force against the respective levers (6,6'), depending on each application.

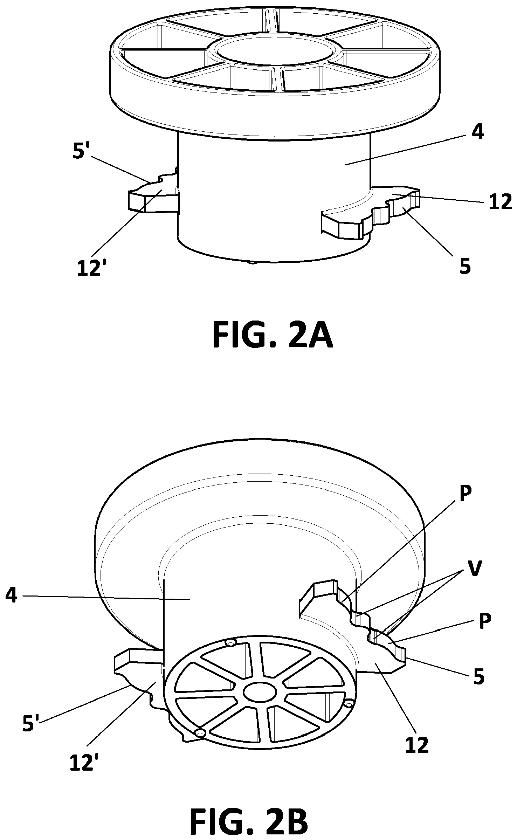

As represented in **Figures 2A,2B****,** the gear shift selector (4) has the form of a knob having a cylindrical body to which walls (12,12') are attached in a way that they extend or project radially from the cylindrical gear shift selector (4). Preferably, the walls (12) extend radially form the gear shift selector (4) and are transversal to the axis (X). The contouring surfaces (5,5') are formed at the free edge of the walls (12,12').

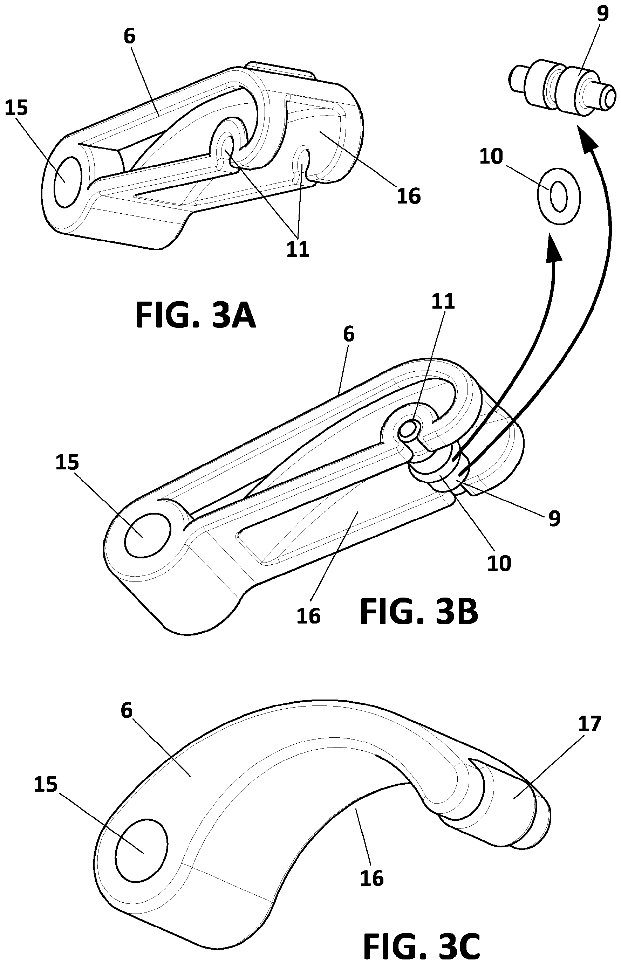

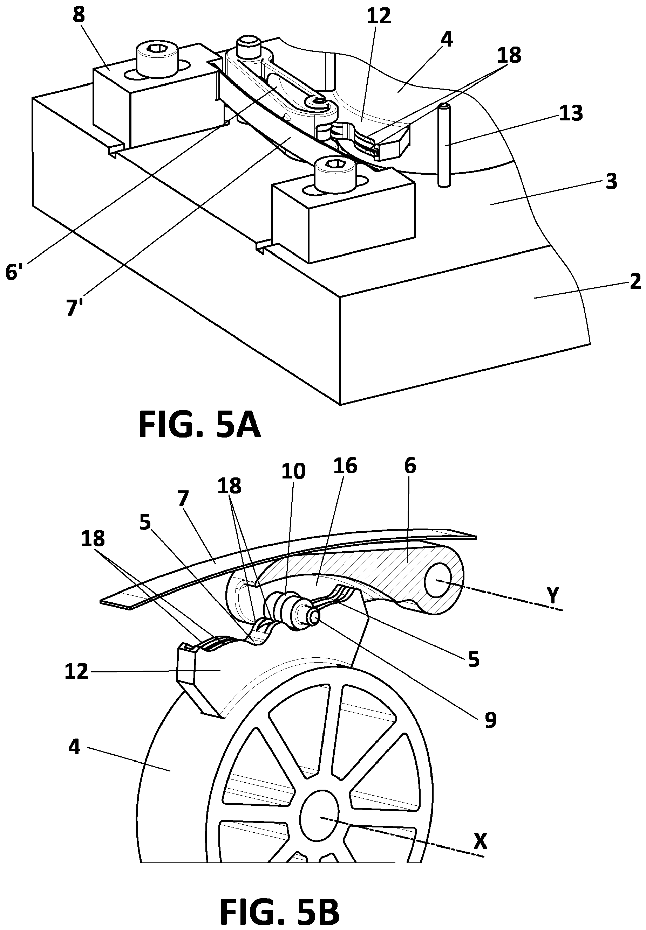

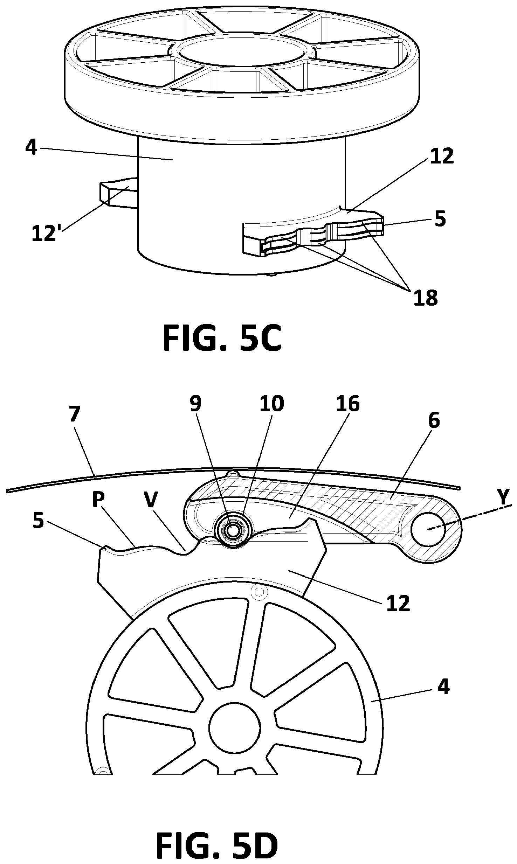

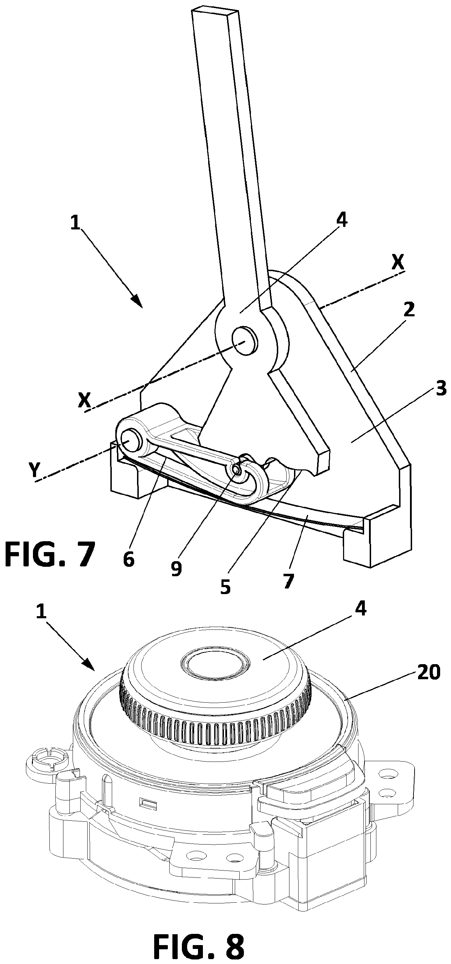

The lever (6) is represented in more detail in **Figures 3A,3B****,** and it is formed as a solid and elongated body with a bore (15) at one of its ends for receiving a shaft defining the axis (Y), and circular openings (11) formed near the other end. The lever (6) has a cavity (16) for allowing passage of a wall (12) while the shift selector (4) is rotating as shown especially in **Figures 5B****,** **5D** **and** **7****.**

At least two stoppers (13), 4 stoppers in this embodiment, are mounted at specific fixed position on the supporting surface (3), as to set the two ends positions of the rotational movement of the shift selector (4) by contacting with the walls (12,12'), as more clearly represented in the sequence of **Figures 4A** - **4D****.** In the stable positions of **Figures 4B****,****4C****,** the rollers (9,9') are received and retained within diametrically opposed valleys.

Each lever (6,6') incorporates a roller (9,9') rotatably coupled at an end of the lever, and a noise damping member consisting of a o-ring rubber (10,10') is mounted around the respective roller (9,9'). For example, for an easy installation, the rollers (9,9') can be snap-fitted in respective circular openings (11) formed near one end of each lever (6,6').

As shown in the figures, the lever is arranged and configured so that the o-ring rubber (10,10') can roll on the respective contoured surface (5,5') as the gear shift selector (4) rotates about the axis (X).

**Figure 3C** shows an alternative design of the lever (6) embodied as a curved body with a bore (15) at one of its ends for receiving a shaft defining the axis (Y), and also defining a cavity (16). A fixed noise damping element (17) is fitted at the other end of the lever, but in this case, there is no roller, and the noise damping element (10) is fixed. This alternative design is preferred when the required force feedback is low, and the friction and wearing is low, thus, n consequence, the generated noise is also low.

The embodiment of **Figure 1B** is the same as the embodiment of **Figure 1A****,** but the leaf springs (7,7') are replaced by a U-shaped metallic wire (14), which is attached to the supporting surface (3) by its central arm (14a), and the two lateral arms (14b,14c) of the U-shaped metallic wire (14) are placed respectively on the levers (6,6') and act as elastic members to push the levers (6,6') towards the shift selector (4). The provision of a single metallic wire as spring member, facilitates even more the assembly process.

The embodiment of **Figures 5A-5D** is the same as the one in **Figure 1A****,** but the contouring surfaces (5,5') has at least one, preferably a pair of walls or rails (18) protruding from the contouring surface (5,5') and extending only along the unstable areas of the contouring surfaces (5,5') (that is, the areas where the damping member (10) would not rest in a fixed position but it would be forced to move to an stable position). These unstable areas are the peaks of the contouring surface, that is, the convex areas of the contouring surface, and also the two valleys closer to the ends of the contouring surfaces. The stable areas in this embodiment, are defined by the two valleys at the central area of the contouring surfaces (5,5').

It should be noted, especially in view of **Figures 5B****,** **5D****,** that the height of the wall (18) is variable so that the free end of the same defines a curvature that match the curvature of the areas of contouring surface (5,5') where the is no wall. That is, the height of the wall (18) progressively decreases towards the stable areas of the contouring surface (5,5') and it is zero at those areas. In this way, the damping member and/or the roller would slide or roll onto a continuous curved surface without steps.

The damping member in this preferred embodiment is a ring (10), but other shapes, i.e. solid or tubular cylinders, are also part of the invention.. The ring (10) is mounted on a roller (9,9') fitted to the lever (6,6'), and wherein the walls (18), the roller (9,9') and the ring are configured in a way that the roller (9,9') rolls on the edges of the walls (18) and the ring (10) is distanced from the contouring surface (5,5') as the roller (9) rolls onto the walls (18) at the peaks, that is, the ring (10) does not contact the contouring surface (5,5,) at the unstable areas, in this case at the peaks. In addition, the ring (10) rolls onto the contoured surface (5,5') and the roller (9,9') is distanced from the contouring surface (5,5') as the roller (9,9') is rotating over the stable areas, the central valleys in this case. Therefore, ring (10) only is contact with the contouring surface (5,5') at the stable positions, in this case at some valleys, thus, pressure on the damper member is only exerted at the stable positions (at the central valleys) but not when the force is higher, when the damper is at the peaks. This configuration increase effort precision and the damper life.

In other preferred embodiments of the invention, the roller with the ring damping material, is replaced by a cylinder or drum of an elastic material, like rubber, that it is rotatable on the contouring surface. In this case, for example the roller (9) shown in **Figure 3B** would be used alone (without ring), and it is made of an elastic material.

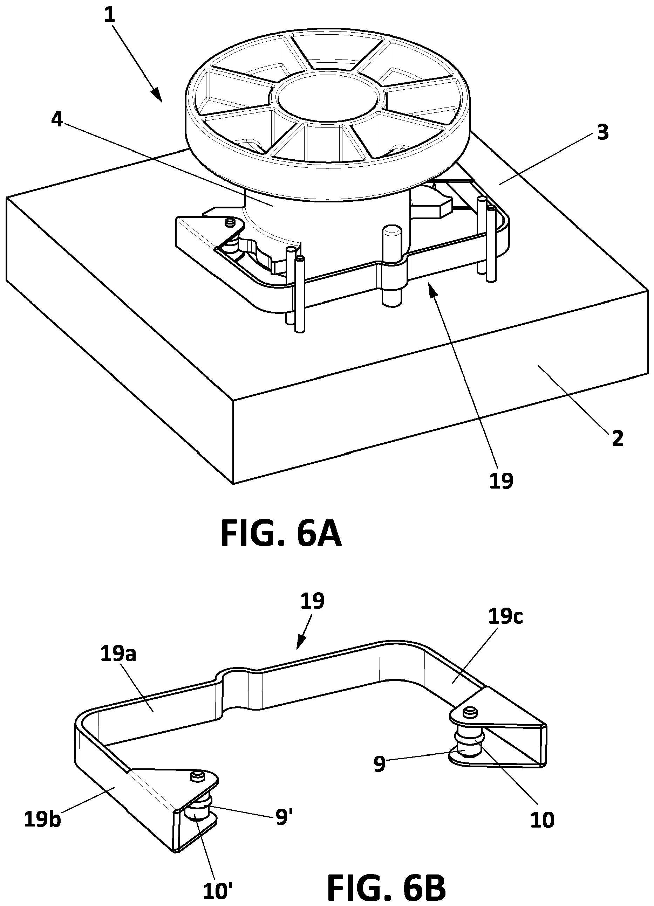

In the embodiment of **Figures 6A,6B****,** the levers of **Figure 1A** are replaced by at least one flexible metallic strip (19) having one end fixed to the supporting surface (3), and the damping member fitted at the free end. Preferably, the damping member is a ring (10) mounted on a roller (9) in turn rotatably fitted to the end of the metallic strip. In this way, the damping member (10) is biased against a contouring surface (5,5') directly by means of the flexible metallic strip (19) without a lever. Preferably, the flexible metallic strip (19) has an U-shaped configuration having a central arm (19a) and two lateral arms (19b,19c), wherein the central arm (19a) is attached to the supporting surface (3), and wherein the lateral arms (19a,19b) are biasing damping members (10,10') against respective contouring surfaces (5,5').

In the alternative embodiment of **Figure 7**, the gear shift selector (4) is a lever arm arranged orthogonally with respect to the axis (X). In this embodiment, there is only one contouring surface (5), one lever (6) and one spring member (7) operating together in the same manner as defined above for **Figures 1A, 1B****.**

As shown in **Figure 8****,** in a practical embodiment, the gear shifter (1) includes an external housing (20), and wherein the supporting surface (3), the levers (6,6') and part of the gearshift selector (4) are enclosed inside the housing (20). Part of the gearshift selector (4) extends outside the casing in the form of a knob for its operation.

Other preferred embodiments of the present invention are described in the appended dependent claims and the multiple combinations of those claims.

## Claims

1. A gear shifter (1) for vehicle transmissions, the gear shifter comprising:
a supporting surface (3),
a gear shift selector (4) mounted on the supporting surface (3) and rotatable about an axis (X),
wherein the gear shift selector (4) is provided with at least one contoured surface (5) having alternating valleys and peaks as to define stable and unstable areas of the contouring surface (5), wherein the contoured surface (5) is jointly rotatable with the gear shift selector (4),
a damping member (10) made of an elastic material, and arranged to slide on the contoured surface (5) as the gear shift selector (4) rotates about the axis (X), and
wherein the damping member (10) is biased against the contoured surface (5) and towards the axis (X).

2. Gear shifter according to claim 1, further comprising at least one lever (6) pivotable with respect to an axis (Y), wherein the damping member (10) is mounted on the lever (6) and wherein the lever (6) is arranged and configured so that the damping member (10) can slide or roll on the contoured surface (5) as the gear shift selector (4) rotates about the axis (X), and wherein the lever (6) is biased against the contoured surface (5).

3. Gear shifter according to claim 1 or 2, wherein the contoured surface (5) extends circumferentially about the axis (X) and it is arranged to rotate on a plane orthogonal to the axis (X), and wherein the lever (6) is biased against the contoured surface (5) in a direction transversal to the axis (X).

4. Gear shifter according to any of the preceding claims, wherein the axis (X) and (Y) are substantially parallel to each other.

5. Gear shifter according to any of the preceding claims, wherein the gear shift selector (4) is part of a knob having a cylindrical body incorporating at least first and second contouring surfaces (5,5') diametrically opposed with respect to the axis (X), and wherein the gear shift selector (4) further comprises first and second levers (6,6') pivotable respectively about axis (Y,Y') and biased respectively against first and second contouring surfaces (5,5'), and wherein the damping members (10,10') of the levers (6,6') can slide or roll respectively on a contoured surface (5,5') as the gear shift selector (4) rotates about the axis (X).

6. Gear shifter according to any of the claims 1 to 4, wherein the gear shift selector (4) is a lever arm arranged orthogonally with respect to the axis (X).

7. Gear shifter according to any of the preceding claims, further comprising at least one roller (9,9') rotatably mounted with a lever (6,6'), and wherein the damping member (10,10') is coupled with the roller (9,9'), so that the damping member (10,10') can roll on the respective contouring surface (5,5') as the contouring surface (5,5') rotates.

8. Gear shifter according to any of the preceding claims, further comprising at least one spring member (7,7') attached to the supporting surface (3) and configured for biasing a lever (6,6') against the respective contouring surface (5,5'), and wherein the spring member (7,7') is a leaf spring, a compression spring, a torsion spring or a wire spring.

9. Gear shifter according to any of the claims 2 to 8, wherein the first and/or second levers (6,6') are biased by their respective spring members (7,7') in opposite directions towards the axis (X).

10. Gear shifter according to any of the preceding claims, wherein each lever (6,6') has a cavity (16), and wherein the countering surface (5,5') is formed at an edge of a wall (12,12') attached the gear shift selector (4) and wherein the lever (6,6') and the corresponding contouring surface (5,5') are arranged so that the contouring surface (5,5') can move inside the lever cavity (16) as the countering surface (5,5') rotates.

11. Gear shifter according to any of the claims 1, further comprising a flexible metallic strip (19) having one end fixed to the supporting surface (3) and another end fitted with the damping member (10), and biasing the damping member (10) against a contouring surface (5,5').

12. Gear shifter according to claim 11 wherein the flexible metallic strip (19) has an U-shaped configuration having a central arm (19a) and two lateral arms (19b,19c), wherein the central arm (19a) is attached to the supporting surface (3), and wherein the lateral arms (19a,19b) bias respective damping members (10,10') against respective contouring surfaces (5,5') in opposite directions towards the axis (X).

13. Gear shifter according to any of the claims 7 to 12, wherein the contouring surface (5,5') has at least one wall (18) protruding from the contouring surface (5,5') and extending on its unstable areas or on its unstable and stable areas, and wherein the wall (18) and the damping member (10) are configured in a way that the roller (9) can roll on the wall (18) and the damping member (10) is distanced from the contouring surface (5,5') as the roller (10) rolls onto the wall (18), and the damping member (10) rolls directly onto the contoured surface (5,5') on the areas of the contouring surface where there is no wall, and wherein optionally the damping member (10) is an o-ring mounted on a roller (9,9') fitted to the lever (6,6') or it is a rotatable cylinder fitted to the lever (6,6') and made of an elastic material.

14. Gear shifter according to claim 13, wherein the height of the wall (18) is variable so that the free end of the wall defines a curvature that match the curvature of the areas of the contouring surface (5,5') where the is no wall, so that the damping member (10) can slide or roll onto a continuous curved surface.

15. Gear shifter according to any of the claims 1 to 7, wherein the lever (6) is arcuate and the damping member (10) is a fixed surface mounted on the free end of the lever (6).
